(19) Europäisches Patentamt
European Patent Office
Office européen des brevets

(11) Publication number: **0 026 986 A1**

# (12) EUROPEAN PATENT APPLICATION

(21) Application number: **80303175.6**

(22) Date of filing: **10.09.80**

(51) Int. Cl.³: **C 08 F 10/00**, C 08 F 4/64

(30) Priority: **04.10.79 GB 7934510**

(43) Date of publication of application: **15.04.81**
**Bulletin 81/15**

(84) Designated Contracting States: **BE DE FR GB IT NL**

(71) Applicant: **IMPERIAL CHEMICAL INDUSTRIES LIMITED, Imperial Chemical House Millbank, London SW1P 3JF (GB)**

(72) Inventor: **Hartshorn, Angus John, 44 Cheltenham Crescent, Runcorn Cheshire (GB)**

(74) Representative: **Hartley, Kenneth et al, Imperial Chemical Industries Limited Legal Department, Patents Thames House North Millbank, London SW1P 4QG (GB)**

(54) **Polymerisation catalysts and process for the homo- or co-polymerisation of alpha-olefins.**

(57) A metal composition suitable as an initiator for olefin polymerisation which is the product of reacting a particulate support material, preferably having a reactive surface which is free from water, with firstly an organometallic compound of the general formula

$R^1_mM$

and secondly a transition metal organometallic compound of the general formula

$R^2_4TX_p$

wherein M is a metal of Groups IA, IIA or IIB of the Periodic Table, T is a transition metal of Group IVA of the Periodic Table, $R^1$ and $R^2$ are hydrocarbyl or substituted hydrocarbyl groups, X, when present, is a singly charged anionic ligand or a monodentate ligand, m is 1 or 2 depending on whether the metal is in Group IA, or in Group IIA or IIB, and p is 0, 1 or 2.

EP 0 026 986 A1

TITLE MODIFIED
see front page

Polymerisation Catalysts

This invention relates to metal compositions in which an organometallic compound and a transition metal organometallic compound are chemically bonded to a substantially inert matrix material, and to processes for the polymerisation of olefinically unsaturated monomers using such compositions as initiators.

Transition metal compositions in which an organometallic compound of a transition metal of Groups IVA to VIA of the Periodic Table of Elements is chemically bonded to a substantially inert matrix material are described and claimed in our British Patent No 1,314,828.

Further in our British Patent No 1,475,184 there is described a process for the polymerisation of ethylene and propylene and the copolymerisation of ethylene with mono α-olefins, especially butene-1 and hexene-1, using a catalyst comprising a Group IVA transition metal hydrocarbyl compound supported on particulate alumina in which the group IVA metal compound is of a very high degree of purity, so as to increase the degree of incorporation of the said other olefin in the product copolymer. The

Group IVA metal hydrocarbyl compounds useful in the practice of the invention claimed in British Patent Nos. 1,314,828 and 1,475,184 are commonly produced by reacting a Group IVA metal compound, e.g. the halide, with a hydrocarbyl compound of a Group I to III metal. The term "very high degree of purity" means that the ratio of the amount of Group IVA metal to the amount of Group I to III metal in Group IVA metal hydrocarbyl compounds is at least 100:1, each expressed in gram atoms.

We have now found that when the matrix material is reacted with a Group IA, IIA or IIB metal hydrocarbyl compound and then reacted with the Group IVA metal hydrocarbyl compound stable chemical entities are produced which may be used as initiators for the polymerisation of olefinically unsaturated monomers and certain of which may have higher activities than the corresponding Group IVA transition metal compositions disclosed in British Patent No 1,314,828.

Accordingly, one aspect of the present invention provides a metal composition which is the product of reacting a particulate support material, preferably having a reactive surface (as hereinafter defined) which is free from water with firstly an organometallic compound of the general formula

$$R^1_mM \qquad \text{I}$$

and secondly a transition metal organometallic compound of the general formula

$$R^2_4TX_p \qquad \text{II}$$

wherein M is a metal of Groups IA, IIA or IIB of the

Periodic Table,
T is a transition metal of Group IVA of the Periodic Table,
$R^1$ and $R^2$ are hydrocarbyl or substituted hydrocarbyl groups,
X, when present, is a singly charged anionic ligand or a monodentante ligand,
m is 1 or 2 depending on whether the metal is in Group IA or in Group IIA or IIB and
p is 0, 1 or 2.

All references to the Periodic Table are to the version of the Periodic Table of the Elements shown in "Advanced Inorganic Chemistry" by F A Cotton and G Wilkinson, 3rd Edition, Interscience Publishers, 1976.

Hydrocarbyl groups of different types may be associated with a single metal atom.

The hydrocarbyl group $R^1$ preferably is an alkyl group containing less than 20 carbon atoms and more preferably an alkyl group containing 2 to 8 carbon atoms.

The metal M is preferably lithium, magnesium or zinc.

A preferred class of Group IA, IIA or IIB metal hydrocarbyl compounds are those which are soluble in a liquid hydrocarbon, e.g. toluene, hexane.

Examples of Group IA, IIA or IIB metal hydrocarbyl compounds include n-butyl lithium, t-butyl lithium, neopentyl lithium, dialkyl magnesiums such as dibutyl magnesium and diethyl zinc.

Preferred organometallic compounds $R^2_4TX_p$ are those in which the transition metal T is zirconium, or hafnium. The monovalent ligand X, where it is present, is preferably a halogen.

Suitable hydrocarbyl groups $R^2$ include straight chain and cyclic alkyl groups and substituted derivatives thereof; and alkenyl groups (including π-alkenyl groups

such as π-allyl) and substituted derivatives thereof, e.g. tetrakis (π-allyl) zirconium or hafnium, tetrakis (π-methylallyl) zirconium or hafnium and zirconium tris (π-allyl) bromide.

The hydrocarbyl group $R^2$ is preferably a substituted alkyl group of general formula

$$-CH_2Y \qquad \text{III}$$

which is σ-bonded to the Group IVA transition metal T through the carbon atom as indicated. Preferably all the groups $R^2$ have general formula III, but it is possible for some of them to comprise other hydrocarbyl groups.

Suitable substituent groups Y include aromatic and polyaromatic groups such as phenyl and naphthyl, giving rise in general formula III to the alkaryl ligands benzyl and (1-methylene-1-naphthyl) and ring substituted derivatives thereof, for example p-methyl benzyl.

Y may also be a cycloalkenyl group, such as a cyclo-octenyl group.

Y may also comprise a group of general formula

$$Z(R^3)_3 \qquad \text{IV}$$

where Z represents carbon, silicon, germanium, tin or lead, and $R^3$ which may be the same or different, represents a hydrocarbyl group, for example alkyl (especially methyl) or aryl (especially phenyl). The group $(R^3)_3$ of formula IV preferably contains a mixture of alkyl (especially methyl) and aryl (especially phenyl) groups, for example when $(R^3)_3$ is dimethylphenyl.

Examples of this preferred class of Group IVA transition metal compounds $R_4TX_p$ include zirconium and hafnium tetra(benzyl), zirconium tetrakis (p-methyl

benzyl), zirconium and hafnium tetrakis (1-methylene-1-naphthyl), zirconium tetrakis (trimethylsilylmethylene), zirconium tetrakis (neopentyl) and zirconium tetrakis (neophyl).

Examples of preferred Group IVA transition metal compounds $R_4TX_p$ containing monovalent ligands X include tris ($\pi$-allyl) zirconium chloride, bromide or iodide and the equivalent $\pi$-methallyl and benzyl compounds.

By "reactive surface" we mean a plurality of sites on, and preferably attached to, the surface of the substantially inert particulate support material, which sites are capable of abstracting, e.g. a magnesium hydrocarbyl from a solution thereof. Preferably the said sites are OH groups chemically bonded to the surface of the particulate support material and the particulate support material is an inorganic material. Where surface OH groups are present they are capable of acting as a proton source, that is they have an acidic function. Such a material will be "substantially inert" in that, whereas the said -OH groups are capable of reacting with, say, the Group IA, IIA and IIB metal organometallic compounds and the Group IVA transition metal organometallic compounds the bulk of the support material is chemically inert. Particularly good examples of such support materials are silica and alumina or mixtures thereof. These comprise a matrix of silicon or aluminium and oxygen atoms, to the surface of which -OH groups are attached, the hydrogen atoms of said groups having an acidic function. However, apart from the presence of these -OH groups, silica and alumina are generally regarded as chemically inert. Within the terms silica and alumina we include silica and alumina based materials containing small amounts of other suitable inorganic oxides, such as magnesium oxide and zinc oxide. The preferred support material is alumina.

It is essential that the support material is freed from adsorbed water, as this would merely react with and destroy the organometallic compounds. The support materials may be readily freed from such adsorbed water, by, for example, a simple thermal treatment.

The reaction between the support material and Group IA, IIA or IIB organometallic compound or Group IVA transition metal organometallic compound comprises displacement of one or more of the hydrocarbyl groups by the hydrogen atom of an OH group or groups of the support material, with liberation of the corresponding free hydrocarbon.

When the Groups IA, IIA or IIB organometallic compounds are reacted, we have found that the hydrocarbyl group of the Group IA organometallic compound or one of both hydrocarbyl groups of the Group IIA or IIB organometallic compounds may at least in part be displaced by -OH groups of the support material, with liberation of the corresponding free hydrocarbon. However, the Group IA, IIA or IIB metal hydrocarbyl compounds may additionally react with the support material without liberation of the corresponding free hydrocarbon.

When the Group IVA transition metal organometallic compounds are reacted, all except one of the hydrocarbyl groups of the organometallic compound may be displaced by -OH groups of the support material, so that there is at least always one hydrocarbyl group attached to the transition metal in the product. This appears to be independent of the number of reactable hydroxylic groups present on the surface of the support material.

The number of reactable hydroxylic groups, that is, the number available for reaction with Group IA, IIA and IIB organometallic compounds and Group IVA transition metal organometallic compounds will depend on the nature and condition of the support material. For

example, in some materials, because of their molecular configuration, some of the hydroxylic groups present are not reactive under our conditions.

The progress of the reaction with the Group IA, IIA, IIB organometallic compounds is most conveniently followed by analysis of the supernatant solutions. Reaction of the Group IVA transition metal organometallic compounds occurs in substantially the same way as disclosed in our British Patent No 1,314,828.

The number of reactive hydroxylic groups present in a given weight of support material will depend upon its nature (for example, whether it is silica or alumina) and its condition (for example, its surface area and the treatment it has received to remove absorbed water). Thus the precise composition of metal compositions according to our invention may vary from one batch or sample to another of the same support material; but successive portions of the same material prepared under identical conditions will give products having the same composition.

The ratio of gram atoms of Group IA, IIA or IIB metal to gram atoms of Group IVA transition metal in the metal compositions of the present invention may be varied within wide limits. Typically the ratio is between 0.05:1 and 100:1, preferably 0.1:1 to 25:1, although higher ratios are not deleterious to catalytic activity.

The proportion of Group IVA transition metal organometallic compound in the metal compositions of the present invention is suitably in the range 0.01 to 1.0 millimole/g, and preferably in the range 0.05 to 0.5 millimole/g.

Compositions according to the present invention may be prepared by first contacting a solution of the Group IA IIA or IIB organometallic compound with a suitable support material, in the absence of free or

adsorbed water. The solvents used for the compounds should be dry and inert; hydrocarbon solvents are preferred. The support material is then contacted with a Group IVA transition metal organometallic compound. Since many of the transition metal organometallic compounds which may be used in our process are thermally unstable, the reaction temperature must be maintained low enough to avoid decomposition of the compounds. With some compounds, temperatures below $0^{o}C$ are required.

An alternative method for preparing metal compositions according to our invention comprises, first, adding excess of either a Group IVA transition metal organometallic compound or a Grignard reagent (magnesium hydrocarbyl compound) to the support material, determining the number of molecules of hydrocarbon liberated, and then adding to a further sample of the support material Group IA, IIA or IIB metal organometallic and Group IVA transition metal organometallic compound which in combination are up to the amount required to liberate an equivalent amount of hydrocarbon. For example, a sample of the support material may be suspended in a solvent and excess of a Group IVA transition metal benzyl added. The amount of toluene produced is measured and related to the weight of support material. A second sample of the support material is then taken and a Group IA, IIA or IIB metal hydrocarbyl is added, followed by a Group IVA transition metal hydrocarbyl.

It is also possible to add an excess of the transition metal organometallic compound after adding less than a complete titre of the Group IA, IIA or IIB organometallic compound, but when excess is used, it will remain in the reaction medium when the composition is separated.

The compositions defined above can be used as initiators for the polymerisation of olefinically unsaturated monomers. In this specification we intend the

term "polymerisation" to mean the formation of high molecular weight polymers and we also intend the term to exclude oligomerisation to low molecular weight materials.

According to a second aspect of the present invention olefinically unsaturated monomers are polymerised by means of an initiator which comprises a transition metal composition which is the product of reacting a particulate support material, preferably having a reactive surface (as hereinbefore defined) which is free from water with firstly an organometallic compound of the general formula

$$R^1_m M \qquad \text{I}$$

and secondly a transition metal organometallic compound of the general formula

$$R^2_4 TX_p \qquad \text{II}$$

wherein M is a metal of Groups IA, IIA or IIB of the Periodic Table, T is a transition metal of Group IVA of the Periodic Table and $R^1$ and $R^2$ are hydrocarbyl or substituted hydrocarbyl groups as hereinbefore defined, X, when present, is a singly charged anionic ligand or a monodentate ligand, m is 1 or 2, depending on whether the metal is in Group IA, or in Group IIA or IIB, and p is 0, 1 or 2.

The term "olefinically unsaturated monomer" is intended to include mono-olefins such as ethylene, propylene and 4-methylpentene-1.

Our compositions may also be used to initiate the copolymerisation of two or more olefinically unsaturated monomers. For example, ethylene may be

copolymerised with propylene, butene, hexene or decene, butadiene or styrene.

Polymerisation processes according to our invention may be carried out by techniques generally used for free radical initiated polymerisation or for polymerisation processes of the type using Ziegler catalysts.

The choice of conditions of pressure and temperature will vary with factors such as the nature of the monomer and initiator, and whether liquid, e.g. bulk or diluent, or gas phase polymerisation is used.

For example, when ethylene is polymerised, pressures from sub-atmospheric to several thousand atmospheres may be used. Low pressure (say from 0.1 to 30 atomospheres) and intermediate pressure (say from 30 to 300 atmospheres) polymerisations may be carried out using conventional equipment; but very high pressure polymerisation must be performed using suitable specialised reactors and pumping equipment. However, since, generally speaking, the higher the pressure the higher the activity, the use of such techniques may be justified. If very high pressures are used, it is preferred that conditions are such that the ethylene feed and polyethylene produced are maintained in a single fluid phase, i.e. the pressure should exceed 500 $Kg/cm^2$, preferably 1000 to 3000 $Kg/cm^2$, and the temperature should be greater than 125°C, say 140-300°C. This type of process is usually operated in a continuous manner.

A wide range of temperatures may be used, but in general low and intermediate pressure ethylene polymerisations are carried out at temperatures in the range 50-160°C.

When the process of our invention is used to polymerise propylene, it is preferred to operate under conditions commonly used for the polymerisation of propylene. However, polymerisation of propylene under other conditions e.g. high pressure, is not excluded.

It is also within the scope of our invention to use our compositions to initiate the copolymerisation of ethylene and propylene together and/or with other olefinically unsaturated monomers.

The polymerisation process of the present invention may be carried out in the liquid or gaseous phase (i.e. in the essential absence of a liquid medium) and preferably in the gaseous phase. Where polymerisation is effected in the liquid phase, and the monomer is not liquid under the polymerisation conditions, the monomer may be dissolved in a suitable solvent. Examples of suitable solvents are aliphatic or aromatic hydrocarbons; for instance pentane, hexane, heptane, octane, decane, benzene, toluene and mixtures thereof.

Polymerisation may be effected either in a batch manner or a continuous basis. Preferably, however, the polymerisation process of the present invention is effected as a continuous gas phase process such as a fluid bed process. A fluid bed reactor for use in the process of the present invention typically comprises a reaction zone and a so-called velocity reduction zone. The reaction zone comprises a bed of growing polymer particles, formed polymer particles and a minor amount of initiator particles fluidised by the continuous flow of the gaseous monomer, and gaseous diluent to remove heat of polymerisation through the reaction zone. A suitable rate of gas flow may be readily determined by simple experiment. Make up of gaseous monomer to the circulating gas stream is at a rate equal to the rate at which particulate polymer product is withdrawn from the reactor and the composition of the gas passing through the reactor is adjusted to maintain an essentially steady state gaseous composition within the reaction zone. The gas leaving the reaction zone is passed to the velocity reduction zone where entrained particles are removed.

Finer entrained particles and dust may be removed in a cyclone and/or fine filter. The said gas is compressed in a compressor and passed through a heat exchanger wherein it is stripped of the heat of polymerisation and then returned to the reaction zone.

Chain transfer agents may be used in a polymerisation process according to our invention, and when ethylene is polymerised their use is normally desirable as the polyethylene produced is of very high molecular weight. Hydrogen may be conveniently used in accordance with usual practice. However, some solvents may act as chain transfer agents.

Our process is preferably effected under an atmosphere free of oxygen, for example under an atmosphere of an inert gas, e.g. nitrogen, or of the monomer to be polymerised. It is also preferred to effect the process using apparatus and solvents which have been carefully freed from impurities, such as oxygen, water and other substances which would otherwise react with the initiators.

The invention is illustrated by the following Examples.

In the examples hexane and iso-octane were purified by passage through $R_{3-11}$ copper catalyst and 5A molecular sieve and finally by sparging with pure nitrogen immediately before use.

Ethylene and butene were purified by passage through $R_{3-11}$ copper catalyst and 5A molecular sieve. Hydrogen was purified by passage through a catalytic deoxygenation unit and 5A molecular sieve. Melt Flow Index ($MFI_{2.16}$) was measured under the conditions of ASTM D-1238, condition E at 190°C and reported as grams per 10 minutes.

<u>Polymerisation of Ethylene</u>

<u>Example 1</u>

A particulate support material, KETJEN (Registered Trade

Mark) Grade B alumina (supplied by Koninklijke Zwavelzurfabrieken v/h Ketjen NV) was dried and converted to the gamma phase by heating at 500°C for 2 hours under a flow of dry nitrogen.

13.68 g of the alumina was slurried in 187 ml toluene in an atmosphere of dry nitrogen. 8.3 ml of a 1.65 M solution of n-butyl lithium in hexane was added dropwise to the slurry of alumina with vigorous stirring over a period of 10 minutes. The reaction mixture was stirred for 1 hour. 10 ml of a 0.0684 M solution of tetrabenzylzirconium solution in toluene was then added dropwise to the resultant slurry with vigorous stirring over 10 minutes, and the reaction mixture was stirred for a further hour. The slurry was allowed to settle and 137 ml of solution removed to give a slurry concentration of 5 ml (g alumina)$^{-1}$. The catalyst thus obtained contained 1.0 mA.g$^{-1}$(milliatom per gram alumina) of lithium and 0.05 mA.g$^{-1}$ of zirconium.

The polymerisation of ethylene was carried out as follows. A commercial hydrogenator (Hydrogenation Control Unit from Electrosound Supplies Ltd) was adapted to deliver ethylene to a 500 ml vessel containing 200 ml iso-octane at 80°C. The vessel was stirred with a VIBRO-MIXER E1 (supplied by ORME Scientific Ltd). 0.2 ml of the catalyst slurry was injected through a septum cap. The activity over the first hour was found to be 514g polyethylene milliatom zirconium (transition metal)$^{-1}$bar$^{-1}$hr$^{-1}$. The results are set out in Table 1.

<u>Examples 2-10</u>

The procedure of Example 1 was repeated using the following quantities of reagents to prepare the catalysts:

<u>Example 2</u>

10.24g $\gamma$-alumina
125.4ml iso-octane
23.1 ml n-butyl lithium (1.33 M solution in hexane)
5.1 ml tetrabenzyl zirconium (0.1 M solution in toluene)
The catalyst contained 3.0 mA.g$^{-1}$ lithium; 0.05 mA.g$^{-1}$ zirconium.

Example 3

9.47 g γ-alumina
36.6 ml toluene
7.4 ml t-butyl lithium (1.28 M solution in hexane)
2.37 ml tetrabenzyl zirconium (0.2 M solution in toluene)

The catalyst contained 1.0 $mA.g^{-1}$ lithium; 0.05 $mA.g^{-1}$ zirconium.

Example 4

7.06 g γ-alumina
90.6 ml toluene
13.58ml neopentyl lithium (0.52 M solution in hexane)
1.76 ml tetrabenzyl zirconium (0.2 M solution in toluene)

The catalyst contained 1.0 $mA.g^{-1}$ lithium; 0.05 $mA.g^{-1}$ zirconium.

Example 5

9.87 g γ-alumina
122.6ml toluene
0.80 ml dibutylmagnesium (0.62 M solution in Isopar E purchased from Lithium Corporation)
24.7 ml tetrabenzyl zirconium (0.2 M solution in toluene)

The catalyst contained 0.05 $mA.g^{-1}$ magnesium; 0.5 $mA.g^{-1}$ zirconium.

Example 6

5.86 g γ-alumina
40 ml toluene
4.73 ml dibutylmagnesium (0.62 M solution in Isopar E)
5.86 ml tetrabenzyl zirconium (0.1 M solution in toluene)

The catalyst contained 0.5 $mA.g^{-1}$ magnesium; 0.1 $mA.g^{-1}$ zirconium.

Example 7

7.23 g γ-alumina
83.5 ml iso-octane
17.77ml dibutylmagnesium (0.62 M solution in Isopar E)
3.7 ml tetrabenzyl zirconium (0.2 M solution in toluene)

The catalyst contained 1.5 $mA.g^{-1}$ magnesium; 0.1 $mA.g^{-1}$ zirconium.

Example 8

14.50g γ-alumina
216.4ml toluene
11.9 ml dibutylmagnesium (0.62 M solution in Isopar E)
3.62 ml tetrabenzyl hafnium (0.2 M solution in toluene)

The catalyst contained 0.5 $mA.g^{-1}$ magnesium; 0.05 $mA.g^{-1}$ hafnium.

Example 9

7.53 g γ-alumina
62 ml toluene
6.16 ml dibutylmagnesium (0.62 M solution in Isopar E)
7.53 ml tetrabenzyl hafnium (0.1 M solution in toluene)

The catalyst contained 0.5 $mA.g^{-1}$ magnesium; 0.10 $mA.g^{-1}$ hafnium.

Example 10

18.23g γ-alumina
155 ml toluene
9.12 ml diethyl zinc (1.0 M solution in toluene)
18.23ml tetrabenzyl zirconium (0.1 M solution in toluene)

The catalyst contained 0.5 $mA.g^{-1}$ zinc; 0.10 $mA.g^{-1}$ zirconium. The results are shown in Table 1.

TABLE 1

| Ex No | Group IA, IIA or IIB Metal Compound (i) | Loading of (i) mA(g support)$^{-1}$ | Transition Metal compound (ii) | Loading of (ii) mA (g support)$^{-1}$ | Ratio (i)/(ii) | Activity gmA$^{-1}$ bar$^{-1}$ hr$^{-1}$ |
|---|---|---|---|---|---|---|
| 1 | Li(n-butyl) | 1.0 | $Zr(benzyl)_4$ | 0.05 | 20 | 514 |
| 2 | Li(n-butyl) | 3.0 | $Zr(benzyl)_4$ | 0.05 | 60 | 526 |
| 3 | Li(t-butyl) | 1.0 | $Zr(benzyl)_4$ | 0.05 | 20 | 1074 |
| 4 | Li(neopentyl) | 1.0 | $Zr(benzyl)_4$ | 0.05 | 20 | 1102 |
| 5 | $Mg(butyl)_2$ | 0.05 | $Zr(benzyl)_4$ | 0.5 | 0.1 | 1075 |
| 6 | $Mg(butyl)_2$ | 0.5 | $Zr(benzyl)_4$ | 0.10 | 5 | 1182 |
| 7 | $Mg(butyl)_2$ | 1.5 | $Zr(benzyl)_4$ | 0.10 | 15 | 1060 |
| 8 | $Mg(butyl)_2$ | 0.5 | $Hf(benzyl)_4$ | 0.05 | 10 | 1180 |
| 9 | $Mg(butyl)_2$ | 0.5 | $Hf(benzyl)_4$ | 0.10 | 5 | 1349 |
| 10 | $Zn(ethyl)_2$ | 0.5 | $Zr(benzyl)_4$ | 0.10 | 5 | 582 |

Comparative Examples A-C

The general procedure for the preparation of the catalyst as described in Example 1 was followed except that a mixture of n-butyl lithium (Examples A, B) or dibutylmagnesium (Example C) and tetrabenzylzirconium was added to the γ-alumina. The quantities of reagents used to prepare the catalysts were as follows:

Example A:

7.22 g γ-alumina
65.6 ml toluene : and a mixture of
1.2 ml n-butyl lithium (1.61 M solution in hexane)
9.66 ml tetrabenzylzirconium (0.2 M solution in toluene) in 20 ml toluene

The catalyst contained 0.25 $mA.g^{-1}$ lithium; 0.25 $mA.g^{-1}$ zirconium.

Example B:

4.52 g γ-alumina
31 ml toluene : and a mixture of
21.8 ml n-butyl lithium (1.65 M solution in hexane)
10 ml tetrabenzylzirconium (0.1 M solution in toluene) in toluene 32 ml

The catalyst contained 1.80 $mA.g^{-1}$ lithium; 0.05 $mA.g^{-1}$ zirconium.

Example C:

8.50 g γ-alumina
72 ml toluene : and a mixture of
3.48 ml di-butyl magnesium (0.62 M solution in ISOPAR E)
10.6 ml tetrabenzylzirconium (0.2 M in toluene) in toluene 20 ml

The catalyst contained 0.25 $mA.g^{-1}$ magnesium; 0.25 $mAg^{-1}$ zirconium.

The polymerisation of ethylene was carried out as described in Example 1. The results are set out in Table 2, from which it can be seen that lower activities are obtained as compared with those obtained in Examples 1-10 (Table 1).

TABLE 2

| Ex No | Group IA, IIA or IIB Metal Compound (i) | Loading of (i) mA(g support)$^{-1}$ | Transition Metal compound (ii) | Loading of (ii) mA(g support)$^{-1}$ | Ratio (i)/(ii) | Activity gmA$^{-1}$bar$^{-1}$ hr$^{-1}$ |
|---|---|---|---|---|---|---|
| A | Li(n-butyl) | 0.25 | $Zr(benzyl)_4$ | 0.25 | 1 | 417 |
| B | Li(n-butyl) | 1.80 | $Zr(benzyl)_4$ | 0.05 | 36 | 10 |
| C | $Mg(butyl)_2$ | 0.25 | $Zr(benzyl)_4$ | 0.25 | 1 | 421 |

TABLE 3

| Ex No | Loading of (iii) mA (g support)$^{-1}$ | Transition Metal compound (iii) | Group IA, IIA or IIB Metal Compound (iv) | Loading of (iv) mA(g support) | Ratio (iii)/(iv) | Activity gmA$^{-1}$bar$^{-1}$ hr$^{-1}$ |
|---|---|---|---|---|---|---|
| D | 0.10 | $Zr(benzyl)_4$ | Li(n-butyl) | 1.0 | 10 | 263 |
| E | 0.10 | $Zr(benzyl)_4$ | $Mg(butyl)_2$ | 1.0 | 10 | 259 |

TABLE 4

| Ex No | Loading of Transition Metal compound mA(g support)$^{-1}$ | Transition Metal compound | Activity gmA$^{-1}$bar$^{-1}$hr$^{-1}$ |
|---|---|---|---|
| F | 0.10 | $Zr(benzyl)_4$ | 414 |
| G | 0.10 | $Hf(benzyl)_4$ | 403 |
| H | 0.40 | $Hf(benzyl)_4$ | 354 |

Comparative Examples D, E

The general procedure for the preparation of the catalyst as described in Example 1 was followed, except that tetrabenzylzirconium was added first to the y-alumina and n-butyl lithium (Example D) and di-n-butyl magnesium (Example E) was added subsequently. The quantities of reagents used to prepare the catalysts were as follows:

Example D

13.34 g y-alumina

116.7 ml toluene

6.67 ml tetrabenzylzirconium (0.20 M solution in toluene)

10.0 ml n-butyl lithium (1.63 M solution in hexane)

The catalyst contained 0.10 $mA.g^{-1}$zirconium; 1.0 $mA.g^{-1}$lithium

Example E

5.08 g y-alumina

65.5 ml toluene

2.5 ml tetrabenzylzirconium (0.2 M solution in toluene)

8.2 ml di-butyl magnesium (0.62 M solution in Isopar E)

The catalyst contained 0.10 $mA.g^{-1}$zirconium; 1.0 $mA.g^{-1}$magnesium

The polymerisation of ethylene was carried out as described in Example 1. The results are set out in Table 3, from which it can be seen that lower activities are obtained as compared with those obtained in Examples 1-10 (Table 1).

Comparative Examples F-H

The general procedure for the preparation of the catalyst as described in Example 1 was followed, except that no Group IA or IIB metal hydrocarbyl was added to the y-alumina in addition to tetrabenzylzirconium (Example F) or tetrabenzylhafnium (Examples G, H). The quantities of reagents used to prepare the catalysts were as follows:

Example F

25.55 g y-alumina

374.3 ml toluene

12.8 ml tetrabenzylzirconium (0.2 M solution in toluene)

The catalyst contained 0.10 $mA.g^{-1}$ zirconium.

Example G

11.30 g y-alumina

107.4 ml toluene

5.65 ml tetrabenzyl hafnium (0.2 M solution in toluene)

The catalyst contained 0.10 $mA.g^{-1}$ hafnium

Example H

9.76 g y-alumina

175.5 ml toluene

19.52 ml tetrabenzyl hafnium (0.2 M solution in toluene)

The catalyst contained 0.40 $mA.g^{-1}$ hafnium

The polymerisation of ethylene was carried out as described in Example 1. The results are set out in Table 4, from which it can be seen that lower activities are obtained as compared with those obtained in Examples 1-10 (Table 1).

Polymerisation of Propylene

The activities for propylene were measured at 1 bar using the polymerisation apparatus described in Example 1 using EC 180 as the hydrocarbon diluent.

Example 11

The procedure of Example 1 was repeated using the catalyst containing 0.50 $mA.g^{-1}$magnesium and 0.10 $mA.g^{-1}$zirconium as described in Example 6.

The catalyst was injected as a slurry (containing 0.13 mA of zirconium) into the aforesaid polymerisation apparatus to give 8.98 g of polypropylene after 2 hours, corresponding to an activity of 37.42 g $mA^{-1}$ $bar^{-1}$ $hr^{-1}$ over 2 hours.

Comparative Example J

The general procedure of Example 11 was repeated except that only tetrabenzylzirconium was added to the y-alumina catalyst. The quantities of reagents used to prepare the catalyst were as follows:

15.2 g y-alumina

266 ml toluene

38 ml tetrabenzylzirconium (0.2 m solution in toluene)

The catalyst contained 0.5 $mA.g^{-1}$ zirconium

The catalyst was injected as a slurry (containing 0.13 mA of zirconium) into the polymerisation apparatus to give 1.58 g of polypropylene after 2 hours, corresponding to an activity of 7.2 $gmA^{-1}$ $bar^{-1}$ $hr^{-1}$ over 2 hours, thereby illustrating the lower activity obtained as compared with the activity in Example 11.

Copolymerisation of Ethylene and Butene-1

Example 12

The catalyst containing 0.50 $mA.g^{-1}$ magnesium and 0.10 $mA.g^{-1}$ zirconium was prepared as described in Example 6.

The polymerisation procedure was as follows:

A one US gallon stainless steel pressure vessel was prepared by heating it to 100°C and evacuating with an efficient vacuum pump. The vessel was cooled to 60°C and 2 litres of purified hexane added. The vessel was then sparged at reaction pressure with about 200l of pure ethylene over a period of 30 minutes to remove any residual moisture and oxygen, after which it was vented and iniator was injected as a slurry (containing 0.05 mA of zirconium) against a stream of ethylene. The vessel was then sealed and pressurised with 200 l/hr ethylene, 50 l/hr hydrogen and 160 ml/hr butene-1. When full reaction pressure (3 $kg/cm^2g$) was reached the vessel was stirred at 1000 rpm and polymerisation commenced. Reaction was allowed to continue for 2 hours at 80°C, excess gases being held from the vessel through a pressure control valve and gas meter so that the reaction rate could be followed, after which the gas supplies were stopped and the vessel cooled and vented.

The copolymer slurry was removed from the autoclave and to this was added 1 litre of de-ionised water and 0.02 wt/vol % of sodium di(ethylhexyl) sulphosuccinate (Aerosol OT) calculated on polymer slurry, i.e. diluent, as a wetting agent. Steam at 100°C was then passed into the stirred vessel at about 25 g per minute and the mixture distilled at a temperature of about 60°C, distillation being

continued until no more organic material separated from the distillate. The copolymer product, which was granular in form, was then filtered from the aqueous slurry remaining in the distillation vessel, washed with water and dried under vacuum at approximately 60°C. 330 g of copolymer product, containing 2.3 molar per cent of butene-1, were obtained. The melt flow index (M.F.I.) of the copolymer was 1.44 as measured by the method of ASTM 1238 - 62T using a 2.16 kg weight at 190°C.

The mole % comonomer incorporation was obtained from the IR analysis of the total methyl group count of the copolymer. The total methyl count, i.e. both methyl groups which are at ends of molecules and those which are at ends of side branches, was measured using a mathematical comparison, by computer, of the absorbance curve from 1310-1430 $cm^{-1}$ with two standard polyethylenes of known methyl count. A correction was then made for those methyl groups which are ends of molecules by subtracting the methyl count of a linear polyethylene prepared using the same catalyst and having a similar MFI. The corrected methyl count was then taken to be the side group content and expressed as mole % co-monomer incorporation.

Comparative Example K

The polymerisation procedure described in Example 12 was repeated using the catalyst containing 0.10 $mA.g^{-1}$zirconium (prepared as described in Comparative Example F).

27 g of copolymer product, containing 2.7 molar per cent of butene-1 was obtained. The melt flow index (M.F.I.) of the copolymer was 0.008. This example illustrates the lower activity obtained as compared with the activity obtained in Example 12.

Comparative Example L

The procedure of Example 12 was repeated using the following quantity of reagents to prepare the catalyst.

7.96 g y-alumina
106 g toluene

3.21 ml dibutyl magnesium (0.62 M solution in Isopar E)
9.95 ml impure tetrabenzylzirconium
(0.2 M in zirconium, solution in toluene) prepared as described below.

0.22 ml benzyl magnesium chloride (0.90 M solution in diethyl ether) was evaporated to dryness and tetrabenzyl zirconium (0.2 M solution in toluene) added. The magnesium dissolved on shaking to give a solution 0.2 M in zirconium and 0.02 M in magnesium.

The catalyst contained 0.28 $mA.g^{-1}$ magnesium; 0.25 $mA.g^{-1}$ zirconium.

The polymerisation procedure described in Example 12 was used with:
0.2 mA zirconium
200 l/hr ethylene
200 l/hr hydrogen
200 ml/hr liquid butene
5 $kg/cm^2g$ full reactor pressure
148 g of copolymer product, containing 0.19 molar per cent of $butene^{-1}$ was obtained. The M.F.I. was 0.026. This Example illustrates the lower activity obtained when using an impure transition metal component as compared with Example 12. It also illustrates the desirability of using a transition metal component of high purity as described in the aforementioned British Patent No 1,475,184.

What we claim is:

1. A metal composition which is the product of reacting a particulate support material which is free from water with firstly an organometallic compound of the general formula

$$R^1_mM \qquad I$$

and secondly a transition metal organometallic compound of the general formula

$$R^2_4TX_p \qquad II$$

wherein M is a metal of Groups IA, IIA or IIB of the Periodic Table, T is a transition metal of Group IVA of the Periodic Table, $R^1$ and $R^2$ are hydrocarbyl or substituted hydrocarbyl groups, X, when present, is a singly charged anionic ligand or a monodentate ligand, m is 1 or 2 depending on whether the metal is in Group IA, or in Group IIA or IIB, and p is 0, 1 or 2.

2. A composition as claimed in claim 1 in which the particulate support material has a reactive surface.

3. A composition as claimed in claim 2 wherein the reactive surface comprises OH groups attached to the surface of a substantially inert particulate support material.

4. A composition as claimed in claim 3 in which the support material is silica and/or alumina, preferably alumina.

5. A composition as claimed in any one of the preceding claims wherein the hydrocarbyl group $R^1$ is an alkyl group having less than 20 carbon atoms.

6. A composition as claimed in claim 5 wherein

the hydrocarbyl group $R^1$ has from 2 to 8 carbon atoms.

7. A composition as claimed in any one of the preceding claims wherein the metal M is lithium, magnesium or zinc.

8. A composition as claimed in claim 7 wherein the organometallic compound $R^1_mM$ is n-butyl lithium, t-butyl lithium, neopentyl lithium, dibutyl magnesium or diethyl zinc.

9. A composition as claimed in any one of the preceding claims wherein the transition metal T is zirconium or hafnium.

10. A composition as claimed in any one of the preceding claims wherein the monovalent ligand X is a halogen.

11. A composition as claimed in any one of the preceding claims wherein the hydrocarbyl group $R^2$ is π-allyl or π-methylallyl.

12. A composition as claimed in claim 11 wherein the transition metal organometallic compound $R^2_4TX_p$ is selected from the group consisting of tetrakis(π-allyl) zirconium or hafnium, tetrakis (π-methylallyl)zirconium or hafnium and zirconium tris (π-allyl) bromide.

13. A composition as claimed in any one of claims 1 to 10 wherein inthe transition metal organometallic compound $R^2_4TX_p$, at least one of the hydrocarbon or substituted hydrocarbyl groups $R^2$ has the general formula $-CH_2Y$ and is sigma bonded to the transition metal T through the carbon atom where Y is selected from a mono or polyaromatic group, cycloalkenyl group or the group $Z(R^3)_3$ where Z represents carbon, silicon, germanium, tin or lead and $R^3$, which may be the same or different, represents a hydrocarbyl or substituted hydrocarbyl group or hydrogen.

14. A composition as claimed in claim 13 wherein $-CH_2Y$ is selected from the group consisting of benzyl, 1-methylene-1-naphthyl, p-methylbenzyl, trimethylsilyl-

methane, neopentyl and neophyl.

15. A composition as claimed in claim 14 wherein the transition metal organometallic compound $R^2_4TX_p$ is selected from the group consisting of zirconium and hafnium tetra(benzyl), tris(benzyl) zirconium chloride, zirconium tetrakis (p-methyl benzyl), zirconium and hafnium tetrakis (1-methylene-1-naphthyl), zirconium (trimethylsilylmethylene), zirconium tetrakis (neopentyl) and zirconium tetrakis (neophyl).

16. A composition as claimed in any one of the preceding claims wherein the ratio of gram atoms of Group IA, IIA or IIB metal to gram atoms of Group IVA transition metal is in the range 0.05:1 and 100:1.

17. A composition as claimed in claim 16 wherein the ratio is in the range 0.1:1 to 25:1.

18. A composition as claimed in any one of the preceding claims wherein the proportion of Group IVA transition metal organometallic compound is in the range 0.01 to 1.0 millimole/g.

19. A composition as claimed in claim 18 wherein the proportion is in the range 0.05 to 0.5 millimole/g.

20. A process for the preparation of a composition as claimed in any one of the preceding claims which comprises contacting in an inert liquid in the absence of free or adsorbed water a particulate support material firstly with an organometallic compound of the general formula $R^1_mM$ (as hereinbefore defined) and secondly with an organometallic compound of the general formula $R^2_4TX_p$ (as hereinbefore defined).

21. A process for the polymerisation or copolymerisation on an olefinically unsaturated monomer which comprises contacting, under polymerisation conditions, at least one olefin monomer with an initiator comprising a composition as claimed in any one of claims 1 to 19.

22. A process as claimed in claim 21 wherein the monomer is ethylene, propylene or 4-methylpentene-1.

23. A process as claimed in claim 22 in which the monomer is ethylene and a chain transfer agent is added to the polymerisation mixture.

24. A process as claimed in claim 23 wherever effected in a fluidised bed reactor.

K HARTLEY
AGENT FOR THE APPLICANTS

European Patent Office

**EUROPEAN SEARCH REPORT**

0026986

Application number

EP 80 30 3175

| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| X | GB - A - 1 336 881 (I.C.I.)<br>* Claims 1-8, 13-23; page 2, lines 25-32, 62-91, 101-112; page 4, lines 42-60 *<br>-- | 1-24 | C 08 F 10/00<br>4/64 |
| A | GB - A - 1 306 044 (SOLVAY and CO)<br>* Claims 1-24 *<br>---- | | |

**TECHNICAL FIELDS SEARCHED (Int. Cl.3)**

C 08 F 10/00-10/14
C 08 F 110/00-110/14
210/00
210/16
4/64
4/62
4/60

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 10-01-1981 | WEBER |

EPO Form 1503.1 06.78